# EUROPÄISCHE PATENTSCHRIFT

(11) **EP 4 129 574 B1**
(45) Veröffentlichungstag und Bekanntmachung des Hinweises auf die Patenterteilung: **25.09.2024**
(21) Anmeldenummer: 21190205.1
(22) Anmeldetag: 06.08.2021
(51) Int. Cl.: B25J 15/02, B23P 19/08, B25J 15/00, B25B 27/00

(54) **RING-MONTAGEVORRICHTUNG UND VERFAHREN ZUM MONTIEREN EINES RINGS**
RING MOUNTING APPARATUS AND METHOD FOR MOUNTING A RING
DISPOSITIF DE MONTAGE D'ANNEAU ET PROCÉDÉ DE MONTAGE D'UN ANNEAU

(43) Veröffentlichungstag der Anmeldung: 08.02.2023
(73) Patentinhaber: Ohrmann GmbH, 59519 Möhnesee (DE)
(72) Erfinder: Vollmer, Michael, 59519 Möhnesee (DE)
(74) Vertreter: Prinz & Partner mbB

(56) Entgegenhaltungen:
- DE-A1- 102006 044 748
- DE-A1- 102017 101 837
- DE-A1- 102017 123 162
- DE-A1- 3 412 811
- JP-A- 2011 189 418

## Beschreibung

Die Erfindung betrifft eine Ring-Montagevorrichtung zum Aufbringen eines elastischen, geschlossen umlaufenden Rings, insbesondere eines Dichtrings, auf einen Außenmantel eines Bauteils, mit wenigstens zwei aufeinander zu und voneinander weg schwenkbaren Greiferarmen, wobei auf jedem Greiferarm ein Finger angebracht ist, und die Finger in eine vom Ring umschlossene Fläche eindringen können und durch das Schwenken der Greiferarme voneinander weg und nach außen beweglich sind, um den Ring zu spannen.

Ferner betrifft die Erfindung ein Verfahren zum Montieren eines Rings.

Zur Montage eines elastischen Rings, insbesondere eines Dichtrings, auf der Außenseite eines Körpers, insbesondere eines kreiszylindrischen Körpers, ist es erforderlich, den elastischen Ring während des Montageprozesses zu weiten.

Im Stand der Technik gibt es verschiedene Ansätze und Ideen, um einen elastischen Ring auf einem Körper zu montieren. In die Praxis haben diese Ansätze und Ideen nur zum Teil Einzug erhalten.

Eine Möglichkeit ist die Verwendung von entsprechend dimensionierten Fügehülsen. Eine Fügehülse ist ein Zwischenbauteil, welches als Montagehilfe genutzt wird und von dem aus der elastische Ring auf das endgültige Bauteil montiert wird. Hierbei erfolgt zunächst ein Aufschieben des elastischen Rings auf das rückseitige, verdünnte Ende der Fügehülse, wodurch der elastische Ring gedehnt wird. Anschließend wird der elastische Ring von der Fügehülse auf das endgültige Bauteil in die Montageposition geschoben. Das Bauteil wird dabei typischerweise in die stirnseitige Öffnung der Fügehülse eingesteckt. Die dabei nötige Schiebbewegung entlang des rückseitigen, verdünnten Endes der Fügehülse, welches für gewöhnlich kegelförmig ausgebildet ist, kann zu einer Abrollbewegung und damit zu einer Verdrehung des elastischen Rings führen. Dies hat häufig eine fehlerhafte Funktion des elastischen Rings zur Folge, da der Ring nach dem Verdrehen nicht torsionsfrei auf dem Körper aufgebracht wird.

Eine weitere Möglichkeit zur Montage von elastischen Ringen ist der sogenannte Mehrfingergreifer. Hierbei wird der elastische Dichtring in der Regel von sechs innenliegenden Fingern aufgenommen und anschließend aufgeweitet, indem sich die Finger nach radial außen bewegen. Der aufgeweitete elastische Ring wird anschließend direkt oder indirekt über eine Fügehülse auf das Bauteil aufgebracht. Diese Einheiten sind häufig verhältnismäßig schwer und benötigt viel Platz.

Ferner bietet sich die am Markt etablierte Montagetechnik mittels Nadeln an. Hierbei erfolgt eine Aufweitung und Montage des Dichtrings durch ein aufspreizbares Nadelpaar. Bei dieser Montagetechnik können elastische Ringe nur im Bereich nahe der Bauteilenden montiert werden. Schwerer zu erreichende Montagestellen können nicht erreicht werden. Außerdem kann es durch Verschleiß und ungünstigen Auftreffwinkel zu einem örtlich falschen oder kräftemäßig zu starken Kontakt des Aufnehmer- oder Bauteilendes mit den Nadeln kommen. Die Nadeln können dadurch verformt werden, wodurch die Funktion der Montagevorrichtung beeinträchtigt werden kann und elastische Ringe durch die verbogenen Nadelenden beim Zurückfahren der Nadeln wieder von dem Aufnehmer- oder Bauteilende gezogen werden. Damit das Bauteil, egal ob es sich um das endgültige Bauteil handelt oder um die Fügehülse, in die vom Ring umschlossene, ebene Fläche eindringen kann, muss diese Fläche schräg zum Bauteil gestellt werden, sodass eine Hälfte unterhalb des stirnseitigen Endes des Bauteils liegt und die andere Hälfte darüber. In diesem Zustand kann dann eine Relativbewegung zwischen dem gekippten Ring und dem Bauteil vorgenommen werden, sodass die untere Hälfte des Rings seitlich am Bauteil zu liegen kommt und das Bauteil dann zwischen die Finger bewegt wird und damit zunehmend vom Ring umschlossen wird. Üblicherweise ist der Ring im gekippten Zustand stationär, und das Bauteil wird längs einer Bahnkurve, üblicherweise einer Kreiskurve auf den Ring zu und dann zwischen die Finger geschwenkt. Am Ende der Schwenkbewegung sitzt dann der Ring in gleichmäßigem Abstand vom stirnseitigen Ende des Bauteils auf dessen Außenmantel.

Das Kippen des Rings ist damit ein sehr wichtiger Vorgang und wird durch eine Relativbewegung des leicht zwischen den Fingern gespannten Rings und einem rückseitigen Anschlag an einem stationären Abschnitt der Vorrichtung erreicht. Dabei ist eine entscheidende Ausrichtarbeit, den Anschlag sowohl in der Höhe als auch im Abstand zu den Fingern exakt zu positionieren. Diese Ausrichtung erfolgt von Vorrichtung zu Vorrichtung individuell durch routiniertes Personal, was aufwendig ist. Ferner ist nach einem Verschleiß und einem Auswechseln von Teilen diese Ausrichtarbeit erneut zu leisten. Darüber hinaus müssen die Nadeln zurückgezogen werden, wenn der Dichtring auf das Bauteil aufgebracht worden ist, was dadurch erfolgt, dass die gesamte Teilvorrichtung, auf der die Greiferarme und die Finger sitzen, sowie sämtliche benachbarten Halte-, Führungs- und Antriebsteile vom Bauteil axial bewegt werden müssen. Dabei werden die Nadeln ebenfalls belastet, denn der Hebelarm der Nadeln vom Kontakt mit dem Dichtring bis zur Einspannstelle der Nadeln an den Greiferarmen nimmt beim Herausführen der Nadeln zu. Darüber hinaus ist die Masse der bewegten Teile hoch.

Die JP 2011 189418 A zeigt einen an einem Roboter montierbaren Greifer, der schwenkbare Greiferarme aufweist, in denen Spitzenelemente gelagert sind. Dabei werden die Spitzenelemente nach unten breiter und sind komplementär zu den Greiferarmen abgeschrägt, sodass sich beim Hochfahren der Spitzenelemente ein Werkstück zwischen dem so entstehenden Konus an den Spitzenelementen und dem Konus an den Greiferarmen eine Klemmwirkung auf der Innenseite zum Runden Werkstück ergibt.

Das Dokument DE 10 2006 044748 A1 Zeigt eine Ring-Montagevorrichtung nach dem Oberbegriff von Anspruch 1.

Aufgabe der Erfindung ist es, einerseits die Belastung der Finger beim Montagevorgang geringzuhalten und darüber hinaus die Vorrichtung einfach zu gestalten und die Inbetriebnahme zu beschleunigen. Ferner soll das erfindungsgemäße Verfahren schnellere Taktzeiten ermöglichen und durch geringere bewegte Masse die Montage noch ausfallsicherer machen.

Die erste Aufgabe wird durch eine Ring-Montagevorrichtung der eingangs genannten Art gelöst, die dadurch gekennzeichnet ist, dass die Finger in ihrer Längserstreckungsrichtung relativ zum zugeordneten Greiferarm verschieblich am zugeordneten Greiferarm gelagert sind. Das bedeutet, beim Verschieben der Finger sind diese exakter geführt, weniger belastet und darüber hinaus wird auch weniger Masse bewegt. Diese exaktere Führung betrifft die Verstellung sowohl beim Kippen des Rings als auch beim Herausziehen der Finger zwischen Bauteil und montiertem Ring. Durch die Führung der Finger in ihren Greiferarmen werden diese am unmittelbar angrenzenden Teil geführt, was für eine hohe Genauigkeit sorgt. Das Auswechseln eines Fingers erfordert deutlich weniger oder keine Einstellarbeit mehr. Darüber hinaus bleiben die Finger sehr stabil gelagert, während sie geschwenkt werden oder in ihrer Längserstreckungsrichtung verschoben werden. Die Finger können natürlich auch als Nadeln und damit als sehr flexible Bauteile ausgeführt werden.

Um eine optimale Führung der Finger zu ermöglichen sowie eine optimale Halterung, ist gemäß einer Variante der Erfindung vorgesehen, dass jeder Finger an einem längsverfahrbaren Schlitten angebracht und mit dem Schlitten in Längserstreckungsrichtung (Längserstreckungsrichtung ist die Haupterstreckungsrichtung der Finger, bei einer Nadel die Längsmittelachse) formschlüssig gekoppelt ist, um zusammen mit dem Schlitten in dieser Längserstreckungsrichtung bewegt zu werden. Die beiden Schlitten sind üblicherweise keine häufigen Verschleißteile und sind in ihrer Form und Geometrie auf eine optimale Führung ausgelegt. Das bedeutet, die Finger sind ausschließlich auf die Aufnahme der Ringe hin optimiert, wogegen die stabile Führung der Finger durch ihre zugeordneten Greiferarme erfolgt. Die verschlissenen Finger müssen dann nur noch in die Führung in den Greiferarmen eingesetzt und mit dem Schlitten gekoppelt werden und brauchen nicht mehr separat ausgerichtet werden.

Vorzugsweise ist zumindest ein Antrieb zum Verschieben der Finger in Längserstreckungsrichtung vorgesehen.

Dieser Antrieb kann ein gemeinsamer Antrieb zum Verschieben aller Finger sein, um einerseits die Synchronität der Bewegung der Finger sicherzustellen und andererseits um Aufwand und Kosten zu reduzieren.

Der Antrieb verschiebt gemäß einer Variante der Erfindung wenigstens ein Kulissenbauteil, welches eine quer zur Verschieberichtung des Kulissenbauteils verlaufende Kulisse aufweist, in die ein in der Kulisse verschiebbarer Koppelabschnitt angreift, welcher mit seinem zugeordneten Finger verbunden ist. Die Idee hinter dieser Variante besteht darin, auf einfache Weise sämtliche Beweglichkeiten für die Finger in eine Koppelung zu legen, denn die Finger müssen aufeinander zu und voneinander weg geschwenkt werden und darüber hinaus auch noch in ihrer Längserstreckungsrichtung bewegt werden. Das bedeutet, die Längsverstellung kann auch bei nicht parallel ausgerichteten Fingern erfolgen. Die Kulisse, in die ein Koppelabschnitt eingreift, ermöglicht ein Verschwenken der Finger, denn mit dem Verschwenken wandern die Koppelabschnitte nur in der Kulisse. Gleichzeitig wird durch Verschieben des Kulissenbauteils durch den Antrieb der Koppelabschnitt mitgenommen, und die Finger werden in ihrer Längserstreckungsrichtung verstellt.

Der Koppelabschnitt muss nicht direkt am Finger vorgesehen sein, sondern kann auch am zugeordneten Schlitten vorgesehen sein. Auch in diesem Fall ist der Finger mit dem Koppelabschnitt verbunden, nämlich über den Schlitten.

Wie bereits erwähnt, kann der Antrieb so ausgebildet sein, dass er in jeder Schwenkstellung der Greiferarme die Finger in Längserstreckungsrichtung verschieben kann. Dies kann durch das Kulissenbauteil erfolgen.

Die Finger stehen in Längserstreckungsrichtung vorzugsweise über die Greiferarme vor. Die Greiferarme bilden einen Anschlag für den zwischen den Fingern aufgenommenen Ring. Das bedeutet, der eingangs genannte separate Anschlag, der auf einer anderen Baugruppe der Vorrichtung angebracht war, kann ersatzlos entfallen. Durch Längsverschieben der Finger bei leicht gespanntem Ring, wandern die Finger mit dem Ring in Richtung des oder der Anschläge, sodass der Ring schließlich gegen den Anschlag stößt und bei Weiterfahren der Finger der Ring verkippt wird. Der Anschlag ist also unmittelbar an den zugeordneten Finger angrenzend angeordnet, sodass Toleranzen vernachlässigbar sind. Auch das Einstellen der Abstände von Finger zu den Anschlägen kann entfallen.

Insbesondere bilden die Greiferarme stirnseitig einen Anschlag, wobei die Anschläge bezüglich einer Axialansicht in Längserstreckungsrichtung der Finger gesehen und bei parallel ausgerichteten Fingern gemeinsam auf einer Seite einer Geraden liegen, die die Finger schneidet. Mit anderen Worten: Wenn die Finger parallel zueinander ausgerichtet sind, sieht man in Richtung der Längserstreckungsrichtung (d.h. in Axialansicht) auf die stirnseitigen Enden der Finger und legt eine Gerade durch die Finger, insbesondere durch die Mittelpunkte der Finger. Die Anschläge liegen dann auf einer Seite, d.h. vorne oder hinten. Wenn das Bauteil sozusagen von vorne kommend zwischen die Finger bewegt wird, liegen die Anschläge hinter den Fingern, weil sie dadurch zu einem Kippen der vorderen Hälfte des Ringes nach oben führten.

Die Finger sollten darüber hinaus am innenliegend Rand des zugeordneten Greiferarms und/oder an einer Vorder- oder Rückseite der Greiferarme angebracht sein, damit der Greiferarm möglichst keine Störkontur für die Bewegung des Bauteils darstellt. Der Raum zwischen den Fingern wird damit optimiert.

Für denselben Zweck ist auch vorgesehen, dass die Greiferarme vom Anschlag beginnend innenseitig eine Aussparung besitzen, die zumindest bis zur Innenseite des zugeordneten Fingers reicht, und zwar senkrecht auf eine Ebene gesehen, in der die Mittelachsen der Finger liegen. Durch diese Aussparungen ist es möglich, das stirnseitige Ende des Bauteils oberhalb der Anschläge und damit im Bereich der Führungen zwischen die Finger bewegen zu lassen. Die Stabilität der Finger in diesem Bereich ist damit hoch,

Die Greiferarme können eine Aufnahmeführung für ihre zugeordneten Finger haben, die in Längserstreckungsrichtung verläuft. Dies sichert einerseits die Position der Finger über viele Betriebsstunden und erleichtert andererseits die Montage der Finger, die nicht mehr ausgerichtet werden müssen.

Die oben genannte Aufgabe wird auch durch ein Verfahren zum Montieren eines elastischen, geschlossen umlaufenden Rings auf einem Außenmantel eines Bauteils gelöst, mittels zumindest zweier Greiferarme, die aufeinander zu und voneinander weg geschwenkt werden und auf jedem Greiferarm einen Finger tragen. Das erfindungsgemäße Verfahren ist durch folgende Schritte gekennzeichnet:
- Relativbewegen von Fingern und Ring zueinander, sodass die Finger in eine vom Ring umschlossene Fläche eindringen (die Fläche ist die vom Ring umschlossene Querschnittsfläche),
- Auseinanderschwenken der Greiferarme samt Finger, wobei im auseinandergeschwenkten Zustand der Ring durch die Finger gespannt ist,
- Zurückziehen der Finger durch eine Verschiebung der Finger in ihrer Längserstreckungsrichtung relativ zu den Greiferarmen, und
- Aufziehen des Rings auf das Bauteil.

Das erfindungsgemäße Verfahren erlaubt ein Längsverschieben der Finger relativ zu den Greiferarmen, wobei dadurch die Finger sicher geführt werden und in ihrer Lage stabil bleiben.

Beim Zurückziehen der Finger kann optional der Ring gegen zumindest einen axialen Anschlag gefahren werden und dadurch gekippt werden.

Die Greiferarme können auch selbst leicht federnd gelagert sein, um nach außen ausweichen und die Maximalbelastung der Finger reduzieren zu können.

Vorzugsweise erfolgt dieses Kippen durch Zurückziehen der Finger, wobei der Ring gegen den zumindest einen Greiferarm fährt und dadurch gekippt wird, d. h. der Greiferarm stellt einen Widerstand für den Ring dar, der weiterbewegt wird und damit eine Kippbewegung durchführt.

Nach dem Zurückziehen der Finger kann das Bauteil relativ zu den Fingern mit einem freien Ende längs einer Kurvenbahn oder linear in die vom Ring umschlossene Fläche bewegt werden. Die Relativbewegung zwischen Ring und Bauteil bedeutet, dass das Bauteil zu den stillstehenden Fingern und damit zum stillstehenden, gekippten Ring bewegt werden kann oder umgekehrt, das Bauteil stationär bleibt und die Finger den Ring zum Bauteil bringen.

Generell ist zu betonen, dass die obigen und nachfolgenden Merkmale sich auf die Ring-Montagevorrichtung und auch das Verfahren beziehen, so dass sie nicht nur ausschließlich im Zusammenhang mit entweder der Ring-Montagevorrichtung oder dem Verfahren offenbart sind.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Frontansicht eines Teils der erfindungsgemäßen Ring-Montagevorrichtung zur Durchführung des erfindungsgemäßen Verfahrens mit abgenommenem Außengehäuse,
- Figur 2 eine Frontansicht einer Baugruppe der erfindungsgemäßen Ring-Montagevorrichtung mit leicht gespreizten Fingern nach Aufnahme des Dichtrings und maximal ausgefahrenen Fingern,
- Figur 3 die Baugruppe nach Figur 2 mit etwas zurückgefahrenen Fingern,
- Figur 4 eine Axialansicht der Finger samt der Anschläge für den Ring,
- Figur 5 die Baugruppe nach Figur 2 mit auseinandergefahrenen und ausgefahrenen Fingern in der Zustellbewegung des mit dem Ring zu bestückenden Bauteils,
- Figur 6 eine Seitenansicht der Baugruppe nach Figur 1, und
- Figur 7 eine Detailansicht der Baugruppe nach Figur 2 im Bereich der Enden der Finger im gespreizten Zustand während des Montagevorgangs.

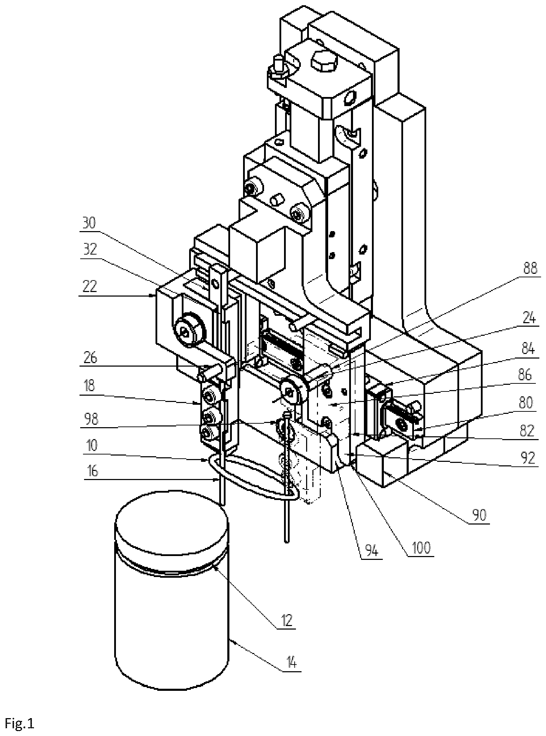

In Figur 1 ist eine Ring-Montagevorrichtung zum Aufbringen eines elastischen, geschlossen umlaufenden Rings 10 dargestellt, welcher ein sogenannter Dichtring, auch O-Ring genannt, ist.

Die Montagevorrichtung ist nicht komplett dargestellt, da nicht alle Antriebe zu sehen sind.

Die Ring-Montagevorrichtung dient dazu, den Ring 10 z.B. in eine Nut 12 eines Bauteils 14 einzubringen, ohne dass der Ring 10 tordiert oder leicht verdreht ist, sondern gleichmäßig gespannt in der Nut 12 sitzt.

Das Bauteil 14 kann ein endgültiges Bauteil (d.h. der Ring 10 bleibt dauerhaft auf dem Bauteil) oder ein temporär genutztes Bauteil in Form einer zylindrischen oder kegeligen Fügehülse sein. Das Bauteil 14 muss auch keine Nut aufweisen. Im Falle einer Fügehülse würde der Ring 10 von der Fügehülse auf das endgültige Bauteil aufgeschoben werden.

Die Ring-Montagevorrichtung umfasst dabei zwei Finger 16, welche in der dargestellten Variante, die nicht einschränkend zu verstehen ist, als sogenannte Nadeln ausgeführt sind. Die Konstruktion erlaubt es, die Finger 16 starr oder flexibel auszuführen.

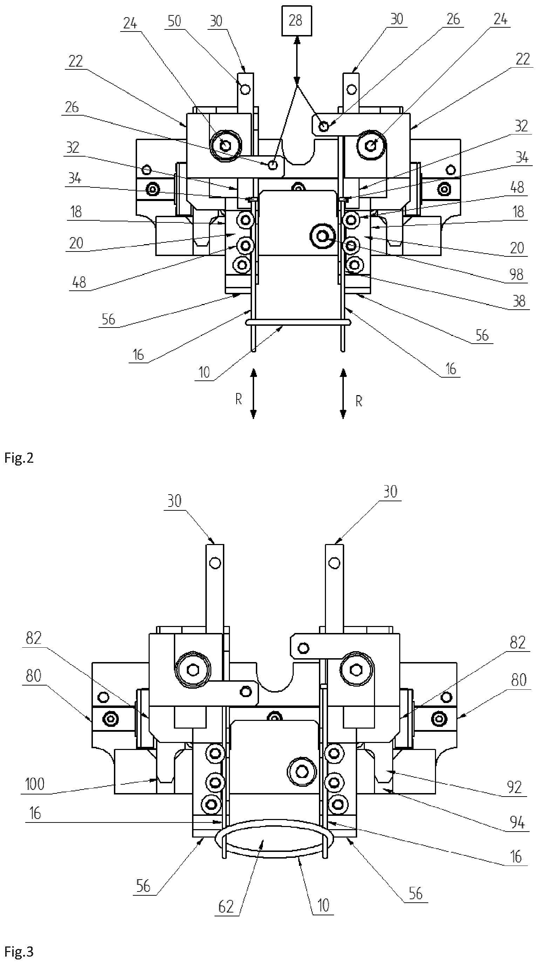

Die in Figur 2 gezeigten Finger 16 sitzen jeweils auf einem eigenen sogenannten Greiferarm 18, der mehrteilig ausgeführt ist, aber auch einteilig ausführbar ist. In der nicht einschränkend zu verstehenden gezeigten Ausführungsform umfasst jeder Greiferarm 18 einen zum Beispiel leistenförmigen Abschnitt 20 (siehe Figur 2), der an einem Schwenkarm 22 befestigt ist, wobei jeder Schwenkarm 22 um eine eigene Schwenkachse 24 schwenkbar ist. Die Schwenkachsen 24 bilden Schwenkpunkte der Greiferarme 18.

Die Schwenkarme 22 haben jeweils einen Hebelarm 26, mittels dem sie an einen stilisiert dargestellten Linearantrieb 28 gekoppelt sind. Durch Verstellung des Linearantriebs 28 werden die Schwenkarme 22 aufeinander zu und voneinander weg geschwenkt und damit auch die Finger 16. Die Greiferarme 18 umfassen somit zumindest die leistenförmigen Abschnitte 20, die Schwenkarme 22 und die Hebelarme 26.

Auf den Schwenkarmen 22 sitzen Schlitten 30, die in entsprechenden Linearführungen 32 auf jedem Schwenkarm 22 in Längserstreckungsrichtung R der Finger (Längsmittelachsen der Finger 16) verschieblich sind.

Die Finger 16 sind mit diesen Schlitten 30 in Längserstreckungsrichtung R formschlüssig gekoppelt.

Diese formschlüssige Koppelung kann beispielsweise dadurch erreicht werden, dass die Finger 16 einen verdickten Kopf 34 besitzen, der in eine entsprechend komplementäre Ausnehmung in dem jeweiligen Schlitten 30 eingesetzt werden kann.

Mit Verstellung der Schlitten 30 in Längserstreckungsrichtung R werden demnach auch die Finger 16 mitverstellt.

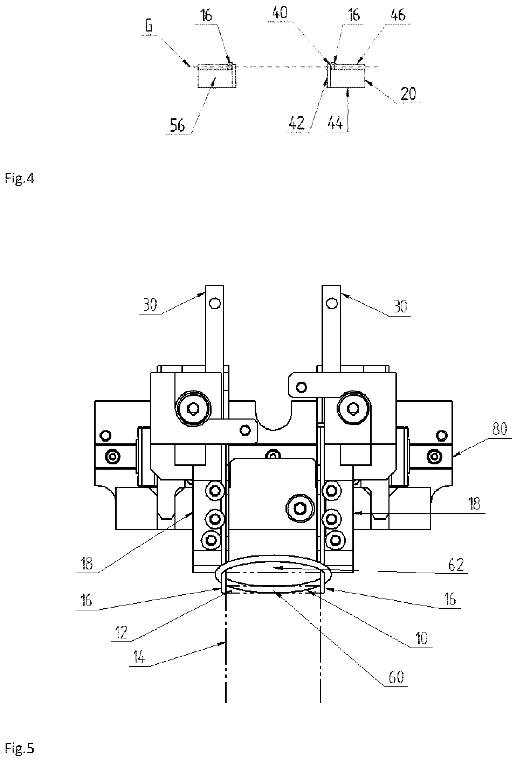

Zur Führung der Finger 16 in seitlicher Richtung haben die Greiferarme 18, hier die leistenförmigen Abschnitte 20 nahe an ihrem innenliegenden Rand 38, insbesondere im Bereich des Übergangs zur Vorderseite (in Figur 2 zu sehen) oder des Übergangs der Rückseite des Greiferarms 18 zum innenliegenden Rand 38 eine rinnenartige Aufnahmeführung 40, die in Figur 4 angedeutet ist. In Figur 4 sind auch der innenliegende Rand 42, die Rückseite 44 und die Vorderseite 46 zu erkennen.

Vorderseitig sind Halter 48, in Form von beispielsweise Schrauben vorgesehen, die ein Herausfallen der Finger 16 aus den Aufnahmeführungen 40 verhindern. Optional können die Schrauben natürlich auch eine Halteplatte am Greiferarm 18 vorderseitig befestigen, um die entsprechende Aufnahmeführung 40 für den zugeordneten Finger 16 zu schließen.

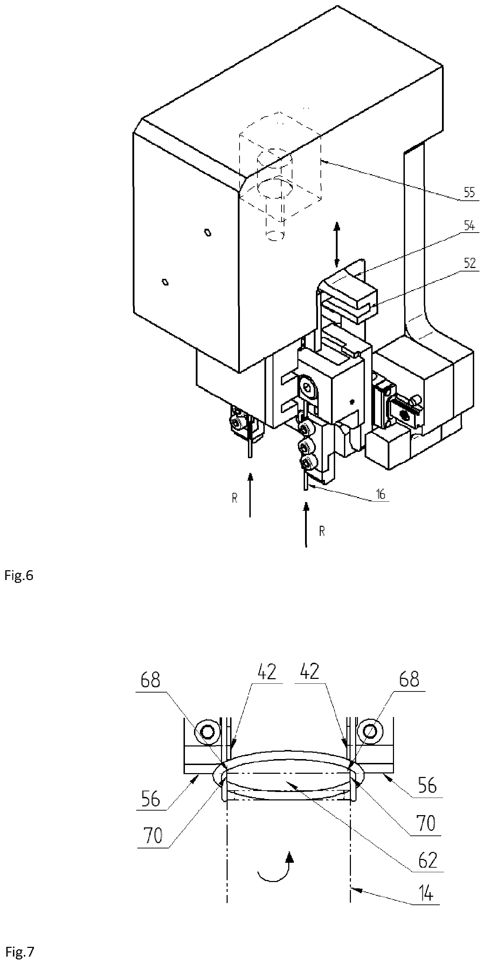

Die Schlitten 30 haben im Bereich ihres oberen Endes einen sogenannten Koppelabschnitt, z. B. einen Stift 50, mit dem sie in eine in Figur 6 dargestellte Kulisse 52 eines Kulissenbauteils 54 ragen.

In Figur 1 sind aus Gründen der Übersichtlichkeit nur der linke Schlitten 30 mit seinem Stift 50 dargestellt.

Die Kulisse 52, in die die Stifte 50 ragen, verläuft quer, insbesondere in Frontansicht im rechten Winkel zur Längserstreckungsrichtung R bei parallel ausgerichteten Fingern 16.

Das Kulissenbauteil 54 wird durch einen in Figur 6 stilisiert dargestellten Antrieb 55 auf und ab bewegt.

Durch diese Bewegung werden die Schlitten 30 in ihren Führungen 32 linear verschoben und damit die Finger 16 in Längserstreckungsrichtung R aufwärts oder abwärts relativ zu den Greiferarmen 18 bewegt.

Durch die Kulisse 52 ist es egal, in welcher Schwenkposition sich die Greiferarme 18 befinden, in jeder Stellung können die Finger 16 längsverstellt werden.

Die Greiferarme 18 haben jeweils einen Anschlag 56 (siehe Figur 2), hier beispielsweise an ihrer unteren Stirnseite. Dieser Anschlag 56 dient dem Kippen des Rings 10 vor der Montage des Ringes auf einem sogenannten Außenmantel 60 des Bauteils 14. In der dargestellten Variante, in der es eine Nut 12 gibt, bilden der Nutgrund und die Wände der Nut 12 den Außenmantel 60.

Nachfolgend wird das Verfahren zum Montieren des Rings erläutert.

Zuerst wird ein zuvor aus einer Menge von Ringen vereinzelter Ring 10 von den beiden aufeinander zu verschwenkten Fingern 16 aufgenommen.

Sobald die Finger 16 weit genug durch die vom Ring 10 umschlossene Fläche 62 (siehe Figur 2) eingedrungen sind, werden die Finger 16 voneinander weggeschwenkt durch Betätigen des Antriebs 28, sodass der Ring 10 etwas gespannt ist und aus seiner ursprünglich kreisrunden Form eine längliche, ovale Form wird. Je nach Elastizität des Rings 10 und der von den Fingern 16 aufgebrachten Kraft stehen die Finger 16 dann parallel oder sie laufen noch schräg aufeinander zu.

Die Anschläge 56 sind nicht vorder- und rückseitig per Finger 16 vorgesehen, sondern liegen gemäß der Axialansicht in Figur 4 auf einer Seite (hier der unteren Seite einer Geraden G, die die Finger schneidet, insbesondere durch die Mittelpunkte der Finger 16 geht.

Beim Zurückschieben der Finger 16 samt Ring 10 stößt die, bezogen auf Figur 3 hintere Hälfte des Rings 10 gegen die Anschläge 56. Nachdem die Finger 16 aber weiter zurückgezogen werden, bleibt die hintere Hälfte an den Anschlägen 56 positioniert, sodass die vordere Hälfte nach oben kippt, wie dies in Figur 3 gezeigt ist. In Frontansicht gemäß Figur 3 liegt die vom Ring 10 umschriebene ebene Fläche 62 deshalb gekippt zu der Zeichenebene und damit der durch die Finger 16 definierten Ebene.

Wird dann das Bauteil 14 seitlich mit seiner Mantelfläche in Richtung Ring 10 und Finger 16 gefahren, können die Finger 16 dann, wenn sie einen kleineren Abstand als der Durchmesser des Bauteils 14 haben, durch das Bauteil 14 oder eine eventuell vorhandene Kulissenbahn, in die die Finger 16 mit Ihren Enden einfahren, auseinanderbewegt werden. Das obere Ende des Bauteils 14 dringt dann in den schräg stehenden Ring 10 ein. Bei diesem Auseinanderdrücken der Finger 16 können optional auch die Greiferarme 18, wenn sie schwenkbar federnd gelagert sind, nach außen verschwenken.

Ist der Ring 10 elastisch genug und ist die Kraft der Finger 16 groß genug, um die Finger 16 so weit voneinander weg zu bewegen, dass ihr Abstand größer als der Durchmesser des Bauteils 14 ist, müssen die Finger 16 nicht mehr durch das Bauteil 14 oder eine Kulisse voneinander weg geschwenkt werden.

Bezogen auf die Frontansicht ist der Ring 10 wie gesagt offen, sodass von vorne das Bauteil in diesen offenen Ring 10 senkrecht zur Zeichenebene eingefahren werden könnte.

Vorzugsweise erfolgt diese Bewegung des Bauteils 14 relativ zum Ring 10, aber in diesem Fall nicht senkrecht und in einer linearen Richtung, vielmehr wird das Bauteil 14 relativ zu den Fingern 16 längs einer Kurvenbahn in die vom Ring 10 umschlossene Fläche 62 bewegt. Eine lineare oder senkrechte Bewegung des Bauteils wird von dieser Erfindung jedoch mit umfasst.

Diese Kurvenbahn verläuft, bezogen auf Figur 3, von vorderhalb der Zeichenebene von vorne unten längs der Kurve nach oben und nach hinten in die Zeichenebene hinein.

Die Bewegung ist dabei so ausgerichtet und die Kurvenbahn so gelegt, dass das unterste Ende des Rings 10 sofort in die Nut 12 eindringt, wenn das Bauteil 14 erstmals den Ring 10 kontaktiert (siehe Figur 5).

Ist dann das Bauteil 14 komplett im Ring 10 aufgenommen, können die Finger 16 komplett zurückgefahren werden.

Ein wichtiges Detail im Bereich der Anschläge 56 und der innenseitigen Ränder 42 ist in Figur 7 gezeigt. Damit das Bauteil 14 möglichst dicht an die einander zugewandten Innenseiten der Finger 16 herangeführt werden kann und möglichst in Längserstreckungsrichtung R (hier auch Axialrichtung des Bauteils 14) weit oben zwischen die Finger 16 bewegt werden kann, sind die Greiferarme 18 angrenzend an den jeweiligen Anschlag 56 innenseitig mit einer Aussparung 68 versehen, in die dann das obere stirnseitige Ende des Bauteils 14 eindringen kann, wenn es durch die Fläche 62 durchgeschwenkt wird. Diese Aussparung 68 reicht bis zur Innenseite 70 der Finger, sodass in diesem Bereich keine oder keine komplette Aufnahmeführung 40 ausgebildet ist.

Die dargestellte Ring-Montagevorrichtung weist darüber hinaus einen sogenannten Breitenverstellmechanismus auf, der nicht zwingend auf die vorgenannte Konstruktion mit längsverschiebbaren Fingern beschränkt ist und auch bei unverschieblichen, starr an den Greiferarmen 18 angebrachten oder mit diesen zu einem Bauteil verschmolzenen Fingern eingesetzt werden kann. Dieser Breitenverstellmechanismus dient dazu, die Ring-Montagevorrichtung ohne großen Umbau, vor allem mit denselben Greiferarmen 18 und Fingern 16, auch für unterschiedlich große, d. h. im Querschnitt unterschiedliche Ringe 10 einsetzen zu können.

Der Breitenverstellmechanismus sieht, ganz allgemein gesagt, vor, dass die Schwenkpunkte, d. h. die Schwenkachsen 24 der Greiferarme 18 aufeinander zu und voneinander weg beweglich sind, womit der Abstand der Greiferarme 18 und damit der Finger 16 variabel sind.

Die Schwenkpunkte, d. h. die Schwenkachsen 24, können längs einer linearen Bahn 80 verfahren werden, siehe Figur 3.

Diese Bahn 80 ist eine Führungsbahn in Form einer Kulisse oder einer Schiene, an der sogenannte Haltekörper 82 entlanglaufen können. Diese Haltekörper 82, siehe auch Figur 1, rechte Hälfte, können mehrstückig ausgebildet sein.

In Figur 1 ist zu sehen, dass gemäß diesem Beispiel die Bahn 80 eine Linearführung ist, auf der ein Wagen 84 für jeden Greiferarm 18 vorhanden ist. Auf dem Wagen 84 sitzt ein Zwischenelement 86, das zusammen mit dem Wagen 84 den Haltekörper 82 bildet. An dem Haltekörper 82 ist dann über einen Führungsbolzen 88 der Greiferarm 18 angebracht. Der Führungsbolzen 88 bildet dann die Schwenkachse 24.

Um für die jeweiligen Größen der Ringe 10 eine schnelle Adaption der Abstände der Greiferarme 18 ohne aufwendige Einstellungen durch Personal zu erreichen, sind verschiedene Abstandshalter 90 vorgesehen. Jede Größe von Ring 10 hat seinen eigenen Abstandshalter 90.

Dieser Abstandshalter 90 koppelt die Haltekörper 82 mechanisch fest miteinander und fixiert ihren Abstand zueinander. Dabei hat jeder Haltekörper 82 einen abstehenden Vorsprung 92, der sich in Längserstreckungsrichtung R erstreckt und in eine Ausnehmung 94 in Abstandshalter 90 hineinragt. Quer zur Längserstreckungsrichtung R ergibt sich zwischen Haltekörpern 82 und Abstandshalter 90 ein spielfreier mechanischer Formschluss in Richtung der Längserstreckung der Bahn 80.

Der Abstand der beiden Ausnehmungen 94 ist somit immer auf den Durchmesser des Rings 10 abgestimmt.

Die verschiedenen Abstandshalter 90 können in die Ring-Montagevorrichtung einfach von unten aus entfernt oder eingesetzt werden, nachdem entsprechende Befestigungsmittel 98 gelöst werden. Dann kann der Abstandshalter 90 einfach nach unten abgezogen werden, und ein neuer Abstandshalter 90 wird von unten eingesetzt, wobei die Haltekörper 82 soweit aufeinander zu oder voneinander weggefahren werden, dass die Vorsprünge 92 in die Ausnehmungen 94 eindringen können.

Einführschrägen 100 am freien Ende der Vorsprünge 92 erleichtern dieses Einsetzen der Abstandshalter 90 und führen zu einer Feinjustage des Abstandes.

Diese Ankoppelung der jeweiligen Abstandshalter 90 an die Ring-Montagevorrichtung erfolgt vorzugsweise bei paralleler Stellung der Finger 16. Durch die Abstandshalter 90 werden sozusagen die Haltekörper 82 mechanisch in Richtung der Bahn 80 fest miteinander gekoppelt und mit einem festen Abstand zueinander fixiert.

Die Koppelung kann natürlich auch umgekehrt dadurch erfolgen, dass am Abstandshalter 90 ein Vorsprung vorgesehen ist, der in eine komplementäre Ausnehmung im Haltekörper 82 eindringt.

## Patentansprüche

1. Ring-Montagevorrichtung zum Aufbringen eines elastischen, geschlossen umlaufenden Rings (10), insbesondere eines Dichtrings, auf einen Außenmantel (60) eines Bauteils (14), mit
wenigstens zwei aufeinander zu und voneinander weg schwenkbaren Greiferarmen (18), wobei auf jedem Greiferarm ein Finger (16) angebracht ist, und die Finger (16) in eine vom Ring umschlossene Fläche (62) eindringen können und durch das Schwenken der Greiferarme (18) voneinander weg und nach außen beweglich sind, um den Ring (10) zu spannen,
**dadurch gekennzeichnet, dass** die Finger (16) in ihrer Längserstreckungsrichtung (R) relativ zum zugeordneten Greiferarm (18) verschieblich am zugeordneten Greiferarm (18) gelagert sind.

2. Ring-Montagevorrichtung nach Anspruch 1, **dadurch gekennzeichnet, dass** jeder Finger (16) an einem längsverfahrbaren Schlitten (30) angebracht und mit dem Schlitten (30) in Längserstreckungsrichtung (R) formschlüssig gekoppelt ist, um zusammen mit dem Schlitten (30) in Längserstreckungsrichtung (R) bewegt zu werden.

3. Ring-Montagevorrichtung nach Anspruch 1 oder 2, **dadurch gekennzeichnet, dass** zumindest ein Antrieb (55) zum Verschieben der Finger (16) in Längserstreckungsrichtung (R) vorgesehen ist.

4. Ring-Montagevorrichtung nach Anspruch 3, **dadurch gekennzeichnet, dass** der Antrieb (55) ein gemeinsamer Antrieb zum Verschieben aller Finger (16) ist.

5. Ring-Montagevorrichtung nach Anspruch 3 oder 4, **dadurch gekennzeichnet, dass** der Antrieb (55) wenigstens ein Kulissenbauteil (54) verschiebt, welches eine quer zur Verschieberichtung (R) des Kulissenbauteils (54) verlaufende Kulisse (52) aufweist, in die ein in der Kulisse (52) verschiebbarer Koppelabschnitt eingreift, welcher mit seinem zugeordneten Finger (16) verbunden ist.

6. Ring-Montagevorrichtung nach einem der Ansprüche 3 bis 5, **dadurch gekennzeichnet, dass** der Antrieb (55) so ausgebildet ist, dass er in jeder Schwenkstellung der Greiferarme (18) die Finger (16) in Längserstreckungsrichtung (R) verschieben kann.

7. Ring-Montagevorrichtung nach einem der vorhergehenden Ansprüche, **dadurch gekennzeichnet, dass** die Finger (16) in Längserstreckungsrichtung (R) über die Greiferarme (18) vorstehen und dass die Greiferarme (18) einen Anschlag (56) für den zwischen den Fingern (16) aufgenommenen Ring (10) bilden.

8. Ring-Montagevorrichtung nach Anspruch 7, **dadurch gekennzeichnet, dass** die Greiferarme (18) stirnseitig einen Anschlag (56) bilden, wobei die Anschläge (56) bezüglich einer Axialansicht in Längserstreckungsrichtung (R) bei parallel ausgerichteten Fingern (16) gemeinsam auf einer Seite einer Geraden (G) liegen, die die Finger (16) schneidet.

9. Ring-Montagevorrichtung nach einem der vorhergehenden Ansprüche, **dadurch gekennzeichnet, dass** die Finger (16) am innenliegenden Rand (42) des zugeordneten Greiferarms (18) und/oder an einer Vorder- oder Rückseite (46, 44) der Greiferarme (18) angebracht sind.

10. Ring-Montagevorrichtung nach Anspruch 9, **dadurch gekennzeichnet, dass**, senkrecht auf eine Ebene gesehen, in der die Mittelachsen der Finger (16) liegen, die Greiferarme (18) vom Anschlag (56) beginnend innenseitig eine Aussparung (68) besitzen, die zumindest bis zur Innenseite (70) des zugeordneten Fingers (16) reicht.

11. Ring-Montagevorrichtung nach einem der vorhergehenden Ansprüche, **dadurch gekennzeichnet, dass** die Greiferarme (18) eine Aufnahmeführung (40) für ihre zugeordneten Finger (16) haben, die in Längserstreckungsrichtung (R) verläuft.

12. Verfahren zum Montieren eines elastischen, geschlossen umlaufenden Rings (10) auf einem Außenmantel (60) eines Bauteils (14) mittels zumindest zweier Greiferarme (18), die aufeinander zu und voneinander weg geschwenkt werden und auf jedem Greiferarm (18) einen Finger (16) tragen, **gekennzeichnet durch** folgende Schritte:
Relativbewegen von Fingern (16) und Ring (10) zueinander, sodass die Finger (16) in eine vom Ring (10) umschlossene Fläche (62) eindringen,
Auseinanderschwenken der Greiferarme (18) samt Finger (16), wobei im auseinandergeschwenkten Zustand der Ring (10) durch die Finger (16) gespannt ist,
Zurückziehen der Finger (16) durch eine Verschiebung der Finger (16) in ihrer Längserstreckungsrichtung (R) relativ zu den Greiferarmen (18), und
Aufziehen des Rings (10) auf das Bauteil (14).

13. Verfahren nach Anspruch 12, **dadurch gekennzeichnet, dass** beim Zurückziehen der Finger (16) der Ring (10) gegen zumindest einen axialen Anschlag (56) fährt und gekippt wird.

14. Verfahren nach Anspruch 12 oder 13, **dadurch gekennzeichnet, dass** beim Zurückziehen der Finger (16) der Ring gegen zumindest einen Greiferarm (18) fährt und gekippt wird.

15. Verfahren nach einem der Ansprüche 12 bis 14, **dadurch gekennzeichnet, dass** nach dem Zurückziehen der Finger (16) das Bauteil (16) relativ zu den Fingern (16) mit einem freien Ende längs einer Kurvenbahn oder einer linearen Bahn in die vom Ring (10) umschlossene Fläche (62) bewegt wird.

## Claims

1. A ring mounting device for applying an elastic, circumferentially closed ring (10), in particular a sealing ring, onto an outer jacket (60) of a component (14), comprising
at least two gripper arms (18) adapted to be pivoted towards and away from each other, each gripper arm having a finger (16) mounted thereon and the fingers (16) being adapted to enter into a surface area (62) enclosed by the ring and to be moved away from each other and outwards by the pivoting of the gripper arms (18) in order to tension the ring (10),
**characterized in that** the fingers (16) are mounted at the associated gripper arm (18) so as to be displaceable relative to the associated gripper arm (18) in their direction of longitudinal extent (R).

2. The ring mounting device according to claim 1, **characterized in that** each finger (16) is attached to a longitudinally traversable carriage (30) and is coupled to the carriage (30) in a form-fitting manner in the direction of longitudinal extent (R) in order to be moved together with the carriage (30) in the direction of longitudinal extent (R).

3. The ring mounting device according to claim 1 or 2, **characterized in that** at least one drive (55) is provided for displacing the fingers (16) in the direction of longitudinal extent (R).

4. The ring mounting device according to claim 3, **characterized in that** the drive (55) is a common drive for displacing all fingers (16).

5. The ring mounting device according to claim 3 or 4, **characterized in that** the drive (55) displaces at least one slotted link component (54) that includes a slotted link (52) which extends transversely to the displacement direction (R) of the slotted link component (54) and in which a coupling section engages that is displaceable in the slotted link (52) and is connected to its associated finger (16).

6. The ring mounting device according to any of claims 3 to 5, **characterized in that** the drive (55) is configured such that it can displace the fingers (16) in the direction of longitudinal extent (R) in any pivot position of the gripper arms (18).

7. The ring mounting device according to any of the preceding claims, **characterized in that** the fingers (16) project beyond the gripper arms (18) in the direction of longitudinal extent (R) and **in that** the gripper arms (18) constitute a stop (56) for the ring (10) received between the fingers (16).

8. The ring mounting device according to claim 7, **characterized in that** the gripper arms (18) constitute a stop (56) on the end face, wherein the stops (56) are jointly located on one side of a straight line (G) which intersects the fingers (16) with respect to an axial view in the direction of longitudinal extent (R) with the fingers (16) oriented in parallel.

9. The ring mounting device according to any of the preceding claims, **characterized in that** the fingers (16) are attached to the inside edge (42) of the associated gripper arm (18) and/or to a front or rear side (46, 44) of the gripper arms (18).

10. The ring mounting device according to claim 9, **characterized in that**, as viewed perpendicularly onto a plane in which the central axes of the fingers (16) lie, the gripper arms (18) have a recess (68) on the inside, starting from the stop (56), the recess extending at least as far as the inside (70) of the associated finger (16).

11. The ring mounting device according to any of the preceding claims, **characterized in that** the gripper arms (18) have a receiving guide (40) for their associated fingers (16), which extends in the direction of longitudinal extent (R).

12. A method of mounting an elastic, circumferentially closed ring (10) on an outer jacket (60) of a component (14) by means of at least two gripper arms (18) which are pivoted towards and away from each other and carry a finger (16) on each gripper arm (18), **characterized by** the following steps:
moving fingers (16) and ring (10) relative to each other so that the fingers (16) enter into a surface area (62) enclosed by the ring (10);
pivoting the gripper arms (18) along with the fingers (16) apart, the ring (10) being tensioned by the fingers (16) in the pivoted-apart state;
retracting the fingers (16) by a displacement of the fingers (16) in their direction of longitudinal extent (R) relative to the gripper arms (18); and
pulling the ring (10) onto the component (14).

13. The method according to claim 12, **characterized in that** when the fingers (16) are retracted, the ring (10) moves against at least one axial stop (56) and is tilted.

14. The method according to claim 12 or 13, **characterized in that** when the fingers (16) are retracted, the ring moves against at least one gripper arm (18) and is tilted.

15. The method according to any of claims 12 to 14, **characterized in that** after retraction of the fingers (16), the component (16) is moved relative to the fingers (16) by a free end along a curved path or a linear path into the surface area (62) enclosed by the ring (10).

## Revendications

1. Dispositif de montage d'anneau pour l'application d'un anneau élastique circonférentiellement fermé (10), en particulier d'un anneau d'étanchéité, sur une enveloppe extérieure (60) d'un composant (14), comprenant
au moins deux bras de préhension (18) aptes à pivoter l'un vers l'autre et en éloignement l'un de l'autre, un doigt (16) étant agencé sur chaque bras de préhension, et les doigts (16) étant aptes à pénétrer dans une face (62) renfermée par l'anneau et étant mobiles en éloignement l'un de l'autre et vers l'extérieur par le pivotement des bras de préhension (18) pour tendre l'anneau (10),
**caractérisé en ce que** les doigts (16) sont montés sur le bras de préhension associé (18) de manière déplaçable dans leur sens d'extension longitudinale (R) par rapport au bras de préhension associé (18).

2. Dispositif de montage d'anneau selon la revendication 1, **caractérisé en ce que** chaque doigt (16) est monté sur un chariot (30) longitudinalement déplaçable et est couplé par coopération de formes au chariot (30) dans le sens d'extension longitudinale (R), pour être déplacé dans le sens d'extension longitudinale (R) ensemble avec le chariot (30).

3. Dispositif de montage d'anneau selon la revendication 1 ou 2, **caractérisé en ce qu'**il est prévu au moins un entraînement (55) pour le déplacement des doigts (16) dans le sens d'extension longitudinale (R).

4. Dispositif de montage d'anneau selon la revendication 3, **caractérisé en ce que** l'entraînement (55) est un entraînement commun pour le déplacement de l'ensemble des doigts (16).

5. Dispositif de montage d'anneau selon la revendication 3 ou 4, **caractérisé en ce que** l'entraînement (55) déplace au moins un composant de coulisse (54) qui présente une coulisse (52) qui s'étend transversalement au sens de déplacement (R) du composant de coulisse (54) et dans laquelle un tronçon de couplage déplaçable dans la coulisse (52) s'engage, lequel est relié à son doigt associé (16).

6. Dispositif de montage d'anneau selon l'une des revendications 3 à 5, **caractérisé en ce que** l'entraînement (55) est réalisé de manière à pouvoir déplacer les doigts (16) dans le sens d'extension longitudinale (R) dans chaque position de pivotement des bras de préhension (18).

7. Dispositif de montage d'anneau selon l'une des revendications précédentes, **caractérisé en ce que** les doigts (16) font saille des bras de préhension (18) dans le sens d'extension longitudinale (R) et **en ce que** les bras de préhension (18) forment une butée (56) pour l'anneau (10) reçu entre les doigts (16).

8. Dispositif de montage d'anneau selon la revendication 7, **caractérisé en ce que** les bras de préhension (18) forment une butée (56) côté face frontale, les butées (56) se trouvant ensemble d'un côté d'une droite (G) qui coupe les doigts (16) par rapport à une vue axiale dans le sens d'extension longitudinale (R) lors d'un alignement parallèle des doigts (16).

9. Dispositif de montage d'anneau selon l'une des revendications précédentes, **caractérisé en ce que** les doigts (16) sont agencés sur le bord intérieur (42) du bras de préhension associé (18) et/ou sur une face avant ou arrière (46, 44) des bras de préhension (18).

10. Dispositif de montage d'anneau selon la revendication 9, **caractérisé en ce que**, vu perpendiculairement sur un plan dans lequel se trouvent les axes médians des doigts (16), les bras de préhension (18) présentent, du côté intérieur et à partir de la butée (56), un évidement (68) qui s'étend au moins jusqu'à la face intérieure (70) du doigt associé (16).

11. Dispositif de montage d'anneau selon l'une des revendications précédentes, **caractérisé en ce que** les bras de préhension (18) présentent un guidage de logement (40) pour leurs doigts associés (16), lequel s'étend dans le sens d'extension longitudinale (R).

12. Procédé de montage d'un anneau élastique circonférentiellement fermé (10) sur une enveloppe extérieure (60) d'un composant (14) au moyen d'au moins deux bras de préhension (18) qui sont pivotés l'un vers l'autre et en éloignement l'un de l'autre et qui portent un doigt (16) sur chaque bras de préhension (18), **caractérisé par** les étapes suivantes :
mouvement relatif des doigts (16) et de l'anneau (10) les uns par rapport à l'autre de sorte que les doigts (16) pénètrent dans une face (62) renfermée par l'anneau (10),
pivotement des bras de préhension (18) ensemble avec les doigts (16) en éloignement l'un de l'autre, l'anneau (10) étant tendu par les doigts (16) à l'état pivoté en éloignement,
rétractation des doigts (16) par un déplacement des doigts (16) dans leur sens d'extension longitudinale (R) par rapport au bras de préhension (18), et
montage de l'anneau (10) sur le composant (14).

13. Procédé selon la revendication 12, **caractérisé en ce que** lors de la rétractation des doigts (16), l'anneau (10) bute contre au moins une butée axiale (56) et est incliné.

14. Procédé selon la revendication 12 ou 13, **caractérisé en ce que** lors de la rétractation des doigts (16), l'anneau bute contre au moins un bras de préhension (18) et est incliné.

15. Procédé selon l'une des revendications 12 à 14, **caractérisé en ce que** suite à la rétractation des doigts (16), le composant (16) est déplacé par rapport aux doigts (16) par une extrémité libre le long d'une trajectoire courbe ou d'une trajectoire linéaire dans la face (62) renfermée par l'anneau (10).
